# EUROPÄISCHE PATENTANMELDUNG

(11) **EP 1 596 188 A2**
(43) Veröffentlichungstag der Anmeldung: **16.11.2005**
(21) Anmeldenummer: 05004998.0
(22) Anmeldetag: 08.03.2005
(51) Int. Cl.: G01N 27/22, G08B 19/02

(54) **Vorrichtung zur Bestimmung des Fahrbahnzustandes**

(30) Priorität: 13.05.2004 DE 102004024019; 01.06.2004 DE 102004026637
(71) Anmelder: DaimlerChrysler AG, 70567 Stuttgart (DE)
(72) Erfinder: Böhm, Konrad, 89134 Blaustein (DE)

(57) **Zusammenfassung**

Die Erfindung betrifft eine Vorrichtung zur Bestimmung des Zustandes einer Fahrbahnoberfläche, wobei die Vorrichtung ein elektrisches Element aufweist, das zum Erzeugen eines elektrischen Feldes geeignet ist und wobei sich das elektrische Feld bis in den Bereich der Fahrbahnoberfläche erstreckt und wobei Mittel vorhanden sind, aus den elektrischen Eigenschaften des elektrischen Elementes den Zustand der Fahrbahnoberfläche zu bestimmen. Dabei kann es sich bei dem elektrischen Element um einen Kondensator oder um eine Rahmenantenne handeln.

## Beschreibung

Die Erfindung betrifft eine Vorrichtung zur Bestimmung des Straßenzustandes nach dem Oberbegriff des Patentanspruchs 1. Zur Gewährleistung sicheren Fahrens unter wechselnden Umwelt-und insbesondere Wetterbedingungen ist die Kenntnis des Zustandes der Fahrbahn eine wesentliche Voraussetzung. Für den Führer eines Kraftfahrzeuges, aber auch für Assistenz-und Sicherheitssysteme wie beispielsweise ein Antiblockiersystem oder ein elektronisches Stabilitätssystem ist der Zustand der Fahrbahn die wichtigste Eingangsgröße zur Entscheidung über Fahrmanöver oder automatische Fahr- oder Bremseingriffe, um einen optimalen Kontaktes zwischen Fahrbahn und Fahrzeug sicherzustellen und damit die Fahrsicherheit zu erhöhen.

Dabei hängt die Kenntnis der Fahrers über den Zustand der Fahrbahn in hohem Maße von seiner persönlichen Erfahrung, seiner Ortskenntnis und nicht zuletzt von seiner Aufmerksamkeit ab. Hieraus ergibt sich der Bedarf, eine Möglichkeit zu schaffen, den Fahrer davon zu entlasten, den Straßenzustand abzuschätzen. Vielmehr ist es wünschenswert, eine Vorrichtung anzubieten, die den Zustand der Fahrbahn ständig bestimmt und so den Fahrer wirksam entlastet, wodurch seine Sicherheit erhöht wird.

Zur Lösung dieser Problematik sind in der Vergangenheit verschiedene Ansätze bekannt geworden.

So wird beispielsweise der Ansatz verfolgt, aus der Verformung der Reifenaufstandfläche Rückschlüsse auf den Reibwert an der Grenzfläche zwischen Reifen und Fahrbahnoberfläche zu ziehen. Dabei werden beispielsweise Torsionssensoren, Hallsensoren oder der magnetoelastische Effekt ausgenutzt.

Ferner werden berührungslose Verfahren wie beispielsweise akustische Verfahren oder elektromagnetische Wellen (Optik, Radar) angewendet.

In der US-Patentanmeldung US 5 621 413 wird vorgeschlagen, den Zustand der Straßenoberfläche mittels von einer Sendeantenne ausgesandten und von einer Empfangsantenne empfangenen elektromagnetischen Strahlung zu bestimmen. Dabei wird vorzugsweise von der Sendeantenne elektromagnetische Strahlung ausgesandt, die von der Fahrbahnoberfläche reflektiert und anschließend von der Empfangsantenne detektiert wird. Aus dem Vergleich der Eigenschaften des empfangenen Signals (bspw. aus Amplitude und Phase) kann so der Zustand der Fahrbahn bestimmt werden. Zur Bestimmung der Messparameter ist dabei ein erheblicher apparativer Aufwand nötig, darüber hinaus erweist sich die vorgestellte Anordnung als ausgesprochen anfällig gegenüber wechselnden Umweltbedingungen.

Es ist Aufgabe der vorliegenden Erfindung, eine Vorrichtung zu entwickeln, die den genannten Nachteilen des Standes der Technik wirksam begegnet und die es gestattet, den Straßenzustand unter einem oder im Bereich um ein Fahrzeug zuverlässig und auf einfache Weise zu bestimmen.

Diese Aufgabe wird durch eine Vorrichtung mit den Merkmalen des Anspruchs 1 gelöst. Weitere vorteilhafte Ausgestaltungen der erfindungsgemäßen Vorrichtung sind Gegenstand der Unteransprüche.

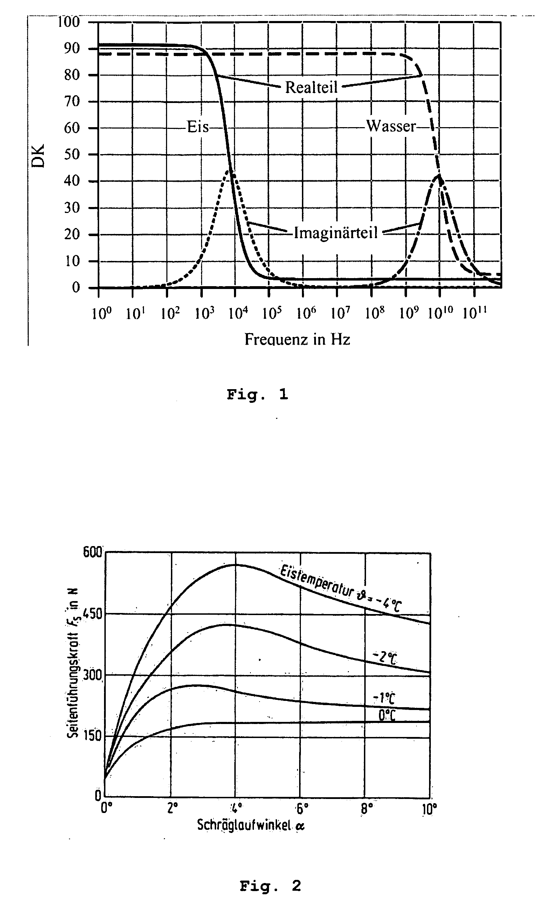

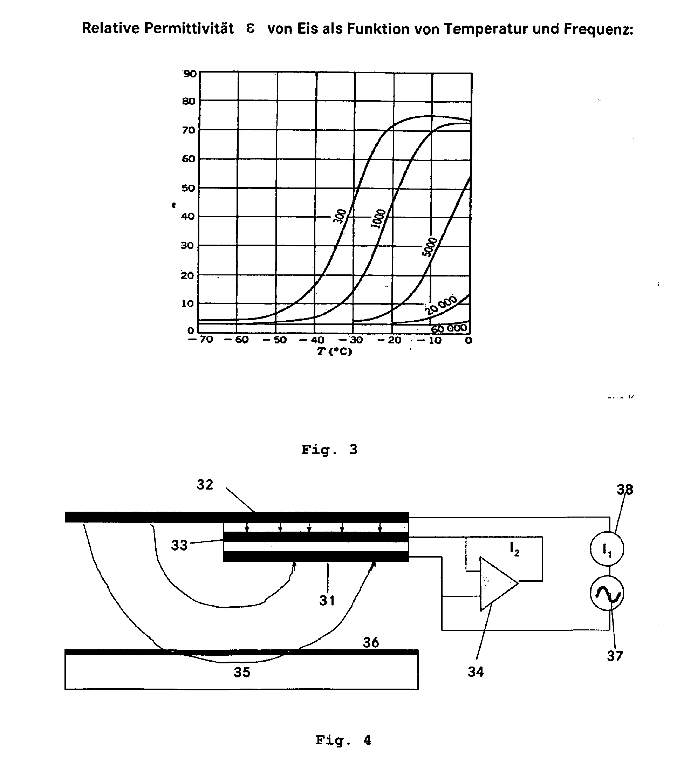

Die erfindungsgemäße Vorrichtung zur Detektion des Zustandes einer Fahrbahnoberfläche weist ein elektrisches Element auf, das zum Erzeugen eines elektrischen Feldes geeignet ist, wobei sich das elektrische Feld bis in den Bereich der Fahrbahnoberfläche erstreckt und wobei Mittel vorhanden sind, aus den elektrischen Eigenschaften des elektrischen Elementes den Zustand der Fahrbahnoberfläche zu bestimmen.
Wesentlich für die elektrischen Eigenschaften des elektrischen Elementes ist die Wechselwirkung des von ihm erzeugten elektrischen Feldes mit der Fahrbahnoberfläche. Insbesondere die dielektrischen Eigenschaften der Fahrbahnoberfläche spielen hier beispielsweise zur Detektion von Eis eine zentrale Rolle.
Nach der Lehre der vorliegenden Erfindung wird in vorteilhafter Weise die Tatsache ausgenutzt, dass sich die Dielektrizitätskonstante des Wassers beim Phasenübergang zu Eis drastisch ändert. Dieser Zusammenhang ist in Figur 1 dargestellt.
Figur 1 zeigt den Verlauf der komplexen Dielektrizitätskonstanten über der Frequenz sowohl für Wasser als auch für Eis. Deutlich erkennbar ist die starke Abhängigkeit des Verlaufs sowohl des Realteils als auch des Imaginärteils der komplexen Dielektrizitätskonstanten davon, ob es sich bei dem betreffenden Medium um Wasser oder um Eis handelt.
Der Imaginärteil der Dielektrizitätskonstante, also der Teil, der ein Maß für die Dämpfung elektromagnetischer Wellen in einem Medium darstellt, zeigt für Eis ein Maximum im Bereich der Relaxationsfrequenz von 10kHz. Im Unterschied hierzu liegt das Maximum des Imaginärteils der Dielektrizitätskonstante für Wasser im Bereich von ca. 10GHz. Ähnliches gilt für die Realteile der komplexen Dielektrizitätskonstanten, die sich in den genannten Frequenzbereichen bei wechselnder Frequenz stark ändern. Dabei ist der Zusammenhang zwischen Real- und Imaginärteil der Dielektrizitätskonstanten durch die Kramers-Kronig-Relationen gegeben, auf die an dieser Stelle nicht näher eingegangen werden soll.
Hieraus wird deutlich, dass es möglich ist, den Zustand der Straßenoberfläche und insbesondere das Vorhandensein von Eis aus einer Messung der dielektrischen Eigenschaften der Straßenoberfläche zu bestimmen.
Darüber hinaus hat sich gezeigt, dass der Reibwert und damit die Haftung eines Fahrzeugreifens auf einer Eisoberfläche stark von der Temperatur des Eises abhängig ist. In Fig. 2 ist der entsprechende Zusammenhang grafisch dargestellt. Damit ist nicht nur die Tatsache, ob Eis vorhanden ist oder nicht, sondern auch die Temperatur eventuell vorhandenen Eises eine wichtige Information als Eingangsgröße für Assistenzsysteme wie beispielsweise elektronische Stabilitätsprogramme oder Antiblockiersysteme.
Auch die Temperatur des Eises hat einen starken Einfluss auf die Dielektrizitätskonstante, wie in Fig. 3 grafisch dargestellt ist.
Die dielektrischen Eigenschaften der Fahrbahnoberfläche sind somit eine wertvolle Informationsquelle für die Bestimmung des Zustandes der Fahrbahnoberfläche und damit wesentliche Parameter zur Erhöhung der Sicherheit von Fahrzeugen im Straßenverkehr.

Eine vorteilhafte Realisationsform der Erfindung besteht darin, als elektrisches Element einen Kondensator zu verwenden, dessen elektrisches Streufeld sich bis in den Bereich der Fahrbahnoberfläche erstreckt. Die Fahrbahnoberfläche und eine darauf gegebenenfalls vorhandene Eis- oder Wasserschicht erfahren durch das elektrische Feld eine Polarisation und beeinflussen auf diese Weise die Kapazität des Kondensators.
Da die Polarisation des Systems Straßenoberfläche/Eis/Wasser über die Dielektrizitätskonstante mit dem elektrischen Feld verknüpft ist, lässt sich durch die Messung der Kapazität des Kondensators die Dielektrizitätskonstante bestimmen und damit die Anwesenheit und gegebenenfalls auch die Temperatur von Eis ermitteln.

In analoger Weise ist es möglich, die Eigenschaften der Fahrbahnoberfläche auf indirekte Weise über ein induktives Element zu bestimmen. Zur Realisation dieser Ausführungsform der Erfindung wird eine Rahmenantenne verwendet, deren Induktivität zusammen mit der Kapazität eines handelsüblichen elektrotechnischen Kondensators einen elektromagnetischen Schwingkreis bildet. Dabei wird in vorteilhafter Weise ausgenützt, dass die elektrische und die magnetische Feldstärke über die Impedanz des leeren Raums (377 Ohm) miteinander verknüpft sind. Somit lässt sich die Wechselwirkung des elektrischen Feldes mit der umgebenden Materie (im vorliegenden Fall beispielsweise Eis) indirekt aus den Parametern des magnetischen Feldes bestimmen. Die Anwesenheit des Eises beeinflusst die Güte und die Resonanzfrequenz des elektromagnetischen Schwingkreises, die mit üblichen Verfahren leicht bestimmt werden können. Auf diese Weise kann über eine entsprechende Kalibrierung der erfindungsgemäßen Vorrichtung erreicht werden, dass die Vorrichtung die Möglichkeit bietet, schnell und verlässlich die Anwesenheit und gegebenenfalls auch die Temperatur von Eis zu bestimmen.

Nachfolgend wird eine mögliche Ausführungsform der Erfindung anhand eines Ausführungsbeispiels näher erläutert.
In Fig. 4 ist eine Kondensatoranordnung dargestellt, wie sie beispielsweise am Unterboden eines Fahrzeuges angebracht sein kann. Dabei erfasst das Streufeld des Kondensators die Fahrbahnoberfläche 35, auf der sich beispielsweise eine Eisschicht 36 befinden kann. Diese Anordnung adressiert insbesondere die Problematik, dass die Messelektrode 31 gegenüber dem Bodenblech 32 des Fahrzeuges elektrisch isoliert sein muss, um verwertbare Messergebnisse zu erhalten. Diese notwendige elektrische Isolierung führt zu einer mit bspw. der Temperatur variablen Kapazität des Kondensators. Dieser Problematik kann mit der nachfolgend beschriebenen Anordnung wirkungsvoll begegnet werden.
Die erfindungsgemäße Anordnung zeigt ferner eine Schirmelektrode 33, die über den Operationsverstärker 34 in der Weise mit der Messelektrode 31 verschaltet ist, dass sich beide Elektroden auf dem selben Potenzial befinden. Im Messbetrieb fließt dabei zwischen dem Ausgang des Operationsverstärkers und der Schirmelektrode 33 der Strom I₂. Maßgeblich für die Bestimmung der Kapazität der erfindungsgemäßen Anordnung ist der Strom I₁, der aufgrund der von der Wechselpannungsquelle 37 erzeugten Wechselspannung zwischen dem Bodenblech 32 und der Messelektrode 31 durch das Strommeßgerät 38 fließt.
Dabei spielt das Bodenblech 32 die Rolle der zweiten Elektrode des Kondensators. Formal lässt sich die Anordnung als Kombination zweier Kapazitäten betrachten, von denen die eine parasitärer Natur ist und somit nicht der Messung unterworfen sein soll und von denen die andere die eigentliche Messkapazität darstellt.
Aus der komplexen Impedanz der Anordnung lässt sich die komplexe Dielektrizitätskonstante eines Mediums, das vom Streufeld des Kondensators erfasst wird, ableiten.

Die komplexe Impedanz kann z. B. mittels einer kommerziellen C-Messbrücke, wie sie beispielsweise im HP 4275A Multifrequency-LCR-Meter von Hewlett-Packard implementiert ist, bestimmt werden.

Ohne weitere Maßnahmen stellt sich jedoch das Problem, dass die Kapazität der erfindungsgemäßen Anordnung erheblich von ihrer Höhe über der Fahrbahnoberfläche abhängt.
Hierzu gibt es verschiedene Lösungsansätze.
So hat es sich beispielsweise bewährt, die Verfälschung des Messergebnisses, die von der variablen Höhe der Anordnung über der Fahrbahnoberfläche herrührt dadurch zu korrigieren, dass die tatsächliche Höhe der Anordnung über der Fahrbahnoberfläche aus Sensordaten weiterer Sensoren bestimmt wird. Dabei kann es sich beispielsweise um Sensoren handeln, mit denen der Wank- oder Nickwinkel von Fahrzeugen gemessen wird, die ohnehin Teil der Ausstattung z.B. eines Fahrdynamiksystems eines Fahrzeuges sind.

Alternativ kann durch ein geeignetes Messverfahren der Einfluss der veränderlichen Höhe der Messanordnung auf das Messergebniss unterdrückt werden, wie nachstehend geschildert.

Vorteilhafterweise wird die gemessene Gesamtkapazität in zwei Anteile aufgespalten. Dabei ist der erste Anteil der Gesamtkapazität lediglich abhängig von der Höhe, jedoch nicht abhängig von der Anwesenheit des Eises. Der zweite Anteil der Gesamtkapazität hängt von der Dicke der Eisschicht sowie von der Höhe der Anordnung über dem Straßenbelag ab.
Zur Detektion von Eis wird die Kapazität des Kondensators bei drei Frequenzen gemessen, beispielsweise bei 1kHz (C₁), 10 kHz (C₂), 100 kHz (C₃) (vgl. Fig. 1; Realteil der Dielektrizitätskonstanten von Eis. Anschließend werden die Differenzen C₁-C₃ und C₂-C₃ gebildet. Nachfolgend wird der Quotient aus den Differenzen gebildet, der nicht mehr von der Höhe abhängt. Aus dem Wert des Quotienten lässt sich ableiten, ob Eis vorhanden ist oder nicht. Ein über mehrere Messzyklen stabiler, deutlich von 1 verschiedener Wert für den Quotienten ist dabei ein Beleg für das Vorhandensein von Eis; in anderen Fällen ist nicht vom Vorhandensein von Eis auszugehen. Dabei eröffnet sich die zusätzliche Möglichkeit, die Temperatur des Eises und damit den Reibwert der Fahrbahnoberfläche kontaktlos zu bestimmen.

Eine weitere mögliche Fehlerquelle besteht darin, dass bei nasser Fahrbahn die Elektroden des Kondensators bzw. die Rahmenantenne durch Spritzwasser benetzt werden, was die elektrischen Eigenschaften der Anordnung erheblich beeinflusst. Eine Lösung dieser Problematik besteht darin, dass die entsprechenden Bauteile mit einem hydrophoben Material beschichtet werden.

Die erfindungsgemäße Anordnung bietet bei vertretbarem apparativen Aufwand eine zuverlässige Möglichkeit zur Bestimmung des Zustandes einer Fahrbahn und insbesondere zur schnellen, zuverlässigen Detektion von Vereisung. Damit verbessert sie die Sicherheit eines mit der genannten Anordnung ausgestatteten Fahrzeuges erheblich.

## Patentansprüche

1. Vorrichtung zur Bestimmung des Zustandes einer Fahrbahnoberfläche, die ein elektrisches Element aufweist, das zum Erzeugen eines elektrischen Feldes geeignet ist, wobei sich das elektrische Feld bis in den Bereich der Fahrbahnoberfläche erstreckt
**dadurch gekennzeichnet,**
**dass** Mittel vorhanden sind, aus den elektrischen Eigenschaften des elektrischen Elementes den Zustand der Fahrbahnoberfläche zu bestimmen.

2. Vorrichtung nach Anspruch 1,
**dadurch gekennzeichnet,**
**dass** die Mittel geeignet sind, das Vorhandensein von Eis auf der Fahrbahnoberfläche zu detektieren.

3. Vorrichtung nach einem der vorangehenden Ansprüche,
**dadurch gekennzeichnet,**
**dass** es sich bei dem elektrischen Element um einen Kondensator handelt.

4. Vorrichtung nach einem der vorangehenden Ansprüche 1 oder 2,
**dadurch gekennzeichnet,**
**dass** es sich bei dem elektrischen Element um eine Rahmenantenne handelt.

5. Vorrichtung nach einem der vorangehenden Ansprüche,
**dadurch gekennzeichnet,**
**dass** ein weiteres elektrisches Element vorhanden ist, das zusammen mit dem ersten elektrischen Element einen elektromagnetischen Schwingkreis bildet.

6. Vorrichtung nach Anspruch 5,
**dadurch gekennzeichnet,**
**dass** Mittel vorgesehen sind, die elektrischen Eigenschaften des ersten elektrischen Elementes aus der Güte oder der Resonanzfrequenz des elektromagnetischen Schwingkreises zu bestimmen.

7. Vorrichtung nach einem der vorangehenden Ansprüche,
**dadurch gekennzeichnet, dass**
die Vorrichtung Mittel aufweist, aus den elektrischen Eigenschaften des ersten elektrischen Elementes die Temperatur ggf. vorhandenen Eises zu bestimmen.

8. Vorrichtung nach einem der vorangehenden Ansprüche,
**dadurch gekennzeichnet,**
**dass** das mindestens ein elektrisches Element mindestens teilweise mit einer hydrophoben Substanz beschichtet ist.

9. Verfahren zur Detektion des Zustandes eines Fahrbahnoberfläche, wobei von einem Kondensator ein Wechselfeld erzeugt wird, das mit der Fahrbahnoberfläche in Wechselwirkung tritt,
**dadurch gekennzeichnet,**
**dass** die Kapazität C₁ des Kondensators bei einer ersten, C₂ bei einer zweiten und C₃ bei einer dritten Frequenz des Wechselfeldes bestimmt wird und zur Bestimmung des Zustandes der Fahrbahnoberfläche der Quotient aus der Differenz von C₁ und C₃ und der Differenz von C₂ und C₃ gebildet wird.
